(19) **Europäisches Patentamt**

**European Patent Office**

**Office européen des brevets**

(11) **EP 0 517 128 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int. Cl.[7]: **C08L 23/02**
// (C08L23/02, C08K5:09)

(21) Anmeldenummer: **92109173.2**

(22) Anmeldetag: **01.06.1992**

(54) **Verwendung eines Carbonsäureanhydrids zur Herstellung einer Polyolefin-Formmasse**

Use of a carboxylic acid anhydride to manufacture a polyolefin moulding composition

Utilisation d'un anhydride d'acide carboxylique pour la fabrication d'une masse de moulage à base de polyoléfine

(84) Benannte Vertragsstaaten:
**BE DE ES FR GB IT LU NL**

(30) Priorität: **01.06.1991 DE 4118010**

(43) Veröffentlichungstag der Anmeldung:
**09.12.1992 Patentblatt 1992/50**

(73) Patentinhaber: **Elenac GmbH**
**77694 Kehl (DE)**

(72) Erfinder:
• **Breuers, Werner, Dr.**
**W-6239 Eppstein/Ts. (DE)**
• **Böhm, Ludwig, Dr.**
**W-6234 Hattersheim (DE)**

(56) Entgegenhaltungen:
**EP-A- 0 481 789**

• **DATABASE WPIL Derwent Publications Ltd., London, GB; AN 83-16177K**
• **DATABASE WPIL Derwent Publications Ltd., London, GB; AN 87-202034**

**Beschreibung**

**Beschreibung für folgende Vertragsstaaten : BE, IT, LU, NL, ES**

Die Erfindung bezieht sich auf eine Polyolefin-Formmasse, welche eine geringe Korrosivität gegenüber Metallteilen besitzt.

Die modernen zur Olefin-Polymerisation verwendeten Übergangsmetallkatalysatoren werden in derart geringen Mengen eingesetzt, daß ihre Reste in den meisten Fällen in den Polymeren verbleiben können. Allerdings können diese Reste bei der Weiterverarbeitung der Polymeren auch Probleme verursachen. So kommt es bei der Zersetzung der Katalysatorrückstände während der Verarbeitung zur Freisetzung von Chlorwasserstoff (HCl) und damit zur Korrosion von Metallteilen der Verarbeitungsmaschinen (z.B. Extrudern). Weiterhin kann die Zersetzung der Katalysatorrückstände zu einer Gelbverfärbung des Granulats führen. Polymer-Folien können an Glanz verlieren oder weisen eine verminderte Transparenz auf.

Zur Vermeidung dieser Probleme ist es üblich, organische Basen, wie Salze der Carbonsäuren, hauptsächlich Salze der Fettsäuren, wie beispielsweise Calciumstearat oder Zinkstearat, als Säureakzeptoren zu verwenden und den Polyolefinpulvern bei der Granulierung als Additive zuzusetzen. Eine weitere Möglichkeit zur Stabilisierung der Polyolefine gegenüber sauren Katalysatorzersetzungsprodukten besteht in der Zugabe von anorganischen Basen, wie basischen Hydroxiden (Ca(OH)$_2$) oder Oxiden (ZnO). Ähnliche Additive werden auch zur Verringerung des Vergilbens von Polyolefinen eingesetzt.

In den vorgenannten Fällen erfolgt die Stabilisierung über eine Neutralisation des Chlorwasserstoffs. Als Endprodukt fällt somit eine salzartige Verbindung an. Bei der Weiterverarbeitung von Polyolefinen gibt es jedoch Verfahren, bei denen kein Salz im Polymeren sein darf, beispielsweise bei der Verarbeitung aus einer Lösung, weil Filter verstopfen könnten.

Es bestand daher die Aufgabe, die Korrosivität und die Vergilbungsneigung von Polyolefin-Formmassen zu verringern, ohne daß dabei eine Salzbildung auftritt.

Bekannt sind Polyolefin-Formmassen, welche mittels Vanadinkatalysatoren hergestellt wurden und eine geringe Neigung zur Verfärbung besitzen (vgl. JP 62-129 330 A). Sie enthalten Polycarbonsäuren, Hydroxypolycarbonsäuren oder deren Salze, beispielsweise Bernsteinsäure, Malonsäure, Maleinsäure, o-Phthalsäure, Ammoniumsuccinat, Natriumglutarat, Natriumcitrat, und dergleichen.

Ebenso bekannt sind Polyolefin-Formmassen, welche zur Verbesserung der Haftung der Polyolefine an mineralischen Füll- und Verstärkungsstoffen oder polaren Polymeren Copolymerisate von Olefinen mit Doppelbindungen enthaltenden Carbonsäureanhydriden (vgl. GB 2163171) oder Pfropfpolymerisate von Doppelbindungen enthaltenden Verbindungen auf Polyolefinen enthalten (vgl. US 4,675,210, US 4,198,327, US 3,437,550, GB 2 163 171).

Es wurde nun gefunden, daß eine Polyolefin-Formmasse, welche ein Carbonsäureanhydrid in freier oder gebundener Form enthält, sehr geringe Korrosivität und Neigung zur Vergilbung aufweist.

Die Erfindung betrifft somit die Verwendung eines Carbonsäureanhydrids in freier oder gebundener Form in einer Menge von 0,01 bis 3 Gew.-%, bezogen auf das zu stabilisierende Material, zur Herstellung einer Polyolefin-Formmasse, die an Maschinenteilen eine verringerte, durch die Polyolefin-Formmasse hervorgerufene Korrosion bewirkt.

Die erfindungsgemäße Polyolefin-Formmasse enthält ein Polyolefin, beispielsweise eines der nachstehend aufgeführten:

1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.
2. Mischungen der unter 1) genannten Polymeren, z.B. Mischungen von Polypropylen mit Polyethylen oder mit Polyisobutylen.
3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

Weiterhin enthält die erfindungsgemäße Polyolefin-Formmasse ein Carbonsäureanhydrid. Geeignete Carbonsäureanhydride sind solche von Monocarbonsäuren, wie beispielsweise Ölsäureanhydrid, Capronsäureanhydrid, n-Undecansäureanhydrid, Laurinsäureanhydrid, Palmitinsäureanhydrid, Margarinsäureanhydrid, Sebacinsäureanhydrid, Stearinsäureanhydrid, Acrylsäureanhydrid, Methacrylsäureanhydrid, Crotonsäureanhydrid, Isocrotonsäureanhydrid, Angelicasäureanhydrid, und solche von Dicarbonsäuren, wie beispielsweise Bernsteinsäureanhydrid, Glutarsäureanhydrid, Maleinsäureanhydrid, Itaconsäureanhydrid, Citraconsäureanhydrid.

Bevorzugt sind Dicarbonsäureanhydride mit einer C-C-Doppelbindung, insbesondere Maleinsäureanhydrid.

Im allgemeinen enthält die erfindungsgemäße Formmasse das Carbonsäureanhydrid in freier Form. Carbonsäureanhydride mit einer C-C-Doppelbindung können jedoch auch in Form eines Copolymerisats mit einem Olefin oder in Form eines Pfropfpolymerisats auf einem Polyolefin eingesetzt werden.

Geeignete Copolymerisate entstehen aus 1-Olefinen und Carbonsäureanhydriden mit C-C-Doppelbindungen, beispielsweise aus Dienen und Maleinsäureanhydrid oder Styrol und Maleinsäureanhydrid, vorzugsweise aus Ethylen und Maleinsäureanhydrid.

Derartige Produkte sind als Handelsprodukte erhältlich. Sie werden meist durch Substanzpolymerisation mittels Spezialkatalysatoren unter Druck oder Copolymerisation hergestellt (vgl. GB 2 163 171).

Geeignete Pfropfpolymerisate entstehen aus einem Polyolefin, beispielsweise Polyethylen, Polypropylen, Polyisobutylen, vorzugsweise Polypropylen, auf welches ein Carbonsäureanhydrid mit einer C-C-Doppelbindung aufgepfropft wird. Vorzugsweise wird Maleinsäureanhydrid eingesetzt. Auch in diesem Fall sind derartige Produkte im Handel erhältlich. Sie können leicht erhalten werden, indem das Polyolefin, ein Radikalbildner (vorzugsweise ein Peroxid) und das Carbonsäureanhydrid zusammen in einem inerten Lösemittel gelöst werden und die Lösung einige Stunden unter Rückfluß erhitzt wird. Beim Abkühlen der Lösung scheidet sich das Pfropfpolymerisat in der Regel aus.

Die Carbonsäureanhydride bzw. die Copolymerisate der Pfropfpolymerisate werden nach allgemein üblichen Methoden in die organischen Polymeren eingearbeitet. Die Einarbeitung kann beispielsweise durch Einmischen der Komponenten und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polyolefinen zuzusetzende Menge an Carbonsäureanhydrid liegt bei 0,01 bis 3, vorzugsweise 0,1 bis 1,0 Gew.-%, bezogen auf das zu stabilisierende Material.

Die den Polyolefinen zuzusetzende Menge an dem vorgenannten Copolymerisat liegt bei 0,1-20 Gew.-%, vorzugsweise 1-10 Gew.-%, bezogen auf das zu stabilisierende Material. Das Pfropfpolymerisat wird im allgemeinen in einer Menge von 0,1-20 Gew.-%, vorzugsweise 1-10 Gew.-%, bezogen auf das zu stabilisierende Material, eingesetzt.

Die Carbonsäureanhydride bzw. Copolymerisate oder Pfropfpolymerisate können auch in Form eines Masterbatches, der diese Komponenten beispielsweise in einer Konzentration von 1 bis 50, vorzugsweise 2,5 bis 20 Gew.-% enthält, den zu stabilisierenden Polyolefinen zugesetzt werden.

Zusätzlich können die zu stabilisierenden Polyolefine noch folgende Additive enthalten, wie beispielsweise:

1. Antioxidantien

    1.1 Alkylierte Monophenole, beispielsweise

        2,6-Di-t-butyl-4-methylphenol,
        2-t-Butyl-4,6-dimethylphenol,
        2,6-Di-t-butyl-4-ethylphenol,
        2,6-Di-t-butyl-4-n-butylphenol,
        2,6-Di-t-butyl-4-i-butylphenol,
        2,6-Di-cyclopentyl-4-methylphenol,
        2-($\alpha$-Methylcyclohexyl)-,4,6-dimethylphenol,
        2,6-Di-octadecyl-4-methylphenol,
        2,4,6-Tri-cyclohexylphenol,
        2,6-Di-t-butyl-4-methoxymethylphenol.

    1.2 Alkylierte Hydrochinone, beispielsweise

        2,6-Di-t-butyl-4-methoxyphenol,
        2,5-Di-t-butyl-hydrochinon,
        2,5-Di-t-amyl-hydrochinon,
        2,6-Diphenyl-4-octadecyloxyphenol.

    1.3 Hydroxylierte Thiodiphenylether, beispielsweise

        2,2'-Thio-bis-(6-t-butyl-4-methylphenol),
        2,2'-Thio-bis-(4-octylphenol),

4,4'-Thio-bis-(6-t-butyl-3-methylphenol),
4,4'-Thio-bis-(6-t-butyl-2-methylphenol).

### 1.4 Alkyliden-Bisphenole, beispielsweise

2,2'-Methylen-bis-(6-t-butyl-4-methylphenol),
2,2'-Methylen-bis-(6-t-butyl-4-ethylphenol),
2,2'-Methylen-bis-[4-methyl-6-($\alpha$-methylcyclohexyl)-phenol],
2,2'-Methylen-bis-(4-methyl-6-cyclohexylphenol),

2,2'-Methylen-bis-(6-nonyl-4-methylphenol),
2,2'-Methylen-bis-(4,6-di-t-butylphenol),
2,2'-Ethyliden-bis-(4,6-di-t-butylphenol),
2,2'-Ethyliden-bis-(6-t-butyl-4-isobutylphenol),
2,2'-Methylen-bis-[6-($\alpha$-methylbenzyl)-4-nonylphenol],
2,2'-Methylen-bis-[6-($\alpha,\alpha$-dimethylbenzyl)-4-nonylphenol],
4,4'-Methylen-bis-(2,6-di-t-butylphenol),
4,4'-Methylen-bis-(6-t-butyl-2-methylphenol),
1,1-Bis-(5-t-butyl-4-hydroxy-2-methylphenyl)-butan,
2,6-Di-(3-t-butyl-5-methyl-2-hydroxybenzyl)-4-methylphenol,
1,1,3-Tris-(5-t-butyl-4-hydroxy-2-methylphenyl)-butan,
1,1-Bis-(5-t-butyl-4-hydroxy-2-methylphenyl)-3-n-dodecylmercaptobutan,
Di-(3-t-butyl-4-hydroxy-5-methylphenyl)-dicyclopentadien,
Di-[2-(3'-t-butyl-2'-hydroxy-5'-methyl-benzyl)-6-t-butyl-4-methylphenyl]-terephthalat.

### 1.5 Benzylverbindungen, beispielsweise

1,3,5-Tri-(3,5-di-t-butyl-4-hydroxybenzyl)-2,4,6-tri-methylbenzol,
Di-(3,5-di-t-butyl-4-hydroxybenzyl)-sulfid,
3,5-Di-t-butyl-4-hydroxybenzyl-mercaptoessigsäure-isooctylester,
Bis-(4-t-butyl-3-hydroxy-2,6-dimethylbenzyl)-dithiol-terephthalat,
1,3,5-Tris-(3,5-di-t-butyl-4-hydroxybenzyl)-isocyanurat,
1,3,5-Tris-(4-t-butyl-3-hydroxy-2,6-dimethylbenzyl)-isocyanurat,
3,5-Di-t-butyl-4-hydroxybenzyl-phophonsäure-dioctadecylester,
Calciumsalz des 3,5-Di-t-butyl-4-hydroxybenzyl-phophonsäure-monoethylesters.

### 1.6 Acylaminophenole, beispielsweise

4-Hydroxy-laurinsäureanilid,
4-Hydroxy-stearinsäureanilid,
2,4-Bis-octylmercapto-6-(3,5-di-t-butyl-4-hydroxy-anilino)-s-triazin,
N-(3,5-di-t-butyl-4-hydroxyphenyl)-carbaminsäure-octylester.

### 1.7 Ester der $\beta$-(5-t-butyl-4-hydroxy-3-methylphenyl)-propionsäure mit ein- oder mehrwertigen Alkoholen, wie beispielsweise mit

| | |
|---|---|
| Methanol, | Diethylenglykol, |
| Octadecanol, | Triethylenglykol, |
| 1,6-Hexandiol, | Pentaerythrit, |
| Neopentylglykol, | Tris-hydroxyethyl-isocyanurat, |
| Thiodiethylenglykol, | Di-hydroxyethyl-oxalsäurediamid. |

### 1.8 Ester der $\beta$-(3,5-Di-t-butyl-hydroxy-phenyl)-propionsäure mit ein- oder mehrwertigen Alkoholen, wie beispielsweise mit

| | |
|---|---|
| Methanol, | Diethylenglykol, |
| Octadecanol, | Triethylenglykol, |
| 1,6-Hexandiol, | Pentaerythrit, |
| Neopentylglykol, | Tris-hydroxyethyl-isocyanurat, |
| Thiodiethylenglykol, | Di-hydroxyethyl-oxalsäurediamid. |

1.9 Amide der β-(3,5-Di-t-butyl-4-hydroxyphenyl)-propionsäure, wie beispielsweise

N,N'-Di-(3,5-di-t-butyl-4-hydroxyphenylpropionyl)-hexamethylendiamin,
N,N'-Di-(3,5-di-t-butyl-4-hydroxyphenylpropionyl)-trimethylendiamin,
N,N'-Di-(3,5-di-t-butyl-4-hydroxyphenylpropionyl)-hydrazin.

1.10 Ester der 3,3-Bis(3'-t-butyl-4'-hydroxyphenyl)-butansäure mit mehrwertigen Alkoholen, wie beispielsweise mit Ethylenglykol, 1,4-Butandiol, 1,6-Hexandiol.

2. UV-Absorber und Lichtschutzmittel

2.1 2-(2'-Hydroxyphenyl)-benztriazole, wie beispielsweise das

5'-Methyl-, 3',5'-Di-t-butyl-, 5'-t-Butyl-, 5'-(1,1,3,3-Tetramethylbutyl)-, 5-Chlor-3',5'-di-t-butyl-, 5-Chlor-3'-t-butyl-5'methyl-, 3'-sec.-Butyl-5'-t-butyl-, 4'-Octoxy-, 3',5'-Di-t-amyl-, 3',5'-Bis-(α,α-dimethylbenzyl)-Derivat.

2.2 2-Hydroxybenzophenone, beispielsweise das

4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3 Ester von gegebenenfalls substituierten Benzoesäuren, beispielsweise

4-t-Butyl-phenylsalicylat, Phenylsalicylat, Octylphenylsalicylat, Dibenzoylresorcin, Bis-(4-t-butylbenzoyl)-resorcin, Benzoylresorcin, 3,5-Di-t-butyl-4-hydroxy-benzoesäure-2,4-di-t-butylphenylester, 3,5-Di-t-butyl-4-hydroxybenzoesäurehexadecylester.

2.4 Acrylate, beispielsweise

α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäuremethylester, N-(β-Carbomethoxy-β-cyano-vinyl)-2-methyl-indolin.

2.5 Nickelverbindungen, beispielsweise

Nickelkomplexe des 2,2'-Thio-bis-[4-(1,1,3,3-tetramethyl-butyl)-phenols], wie der 1:1- oder 1:2-Komplex, gegebenenfalls mit zusätzlichen Liganden wie n-Butylamin, Triethanolamin oder N-Cyclohexyl-diethanolamin, Nickelalkyldithiocarbamate, Nickelsalze von 4-Hydroxy-3,5-di-t-butylbenzylphosphonsäure-mono-alkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden, Nickelsalze der 2-Hydroxy-4-alkoxybenzophenone.

2.6 Sterisch gehinderte Amine, beispielsweise

2.6.1

Bis-(2,2,6,6-tetramethylpiperidyl)-sebacat,

Bis-(1,2,2,6,6-pentamethylpiperidyl)-sebacat,

Bis-(2,2,6,6-tetramethylpiperidyl)-glutarat,

Bis-(1,2,2,6,6-pentamethylpiperidyl)-glutarat,

Bis-(2,2,6,6-tetramethylpiperidyl)-succinat,

Bis-(1,2,2,6,6-pentamethylpiperidyl)-succinat,

4-Stearyloxy-2,2,6,6-tetramethylpiperidin,

4-Stearyloxy-1,2,2,6,6-pentamethylpiperidin,

4-Stearoyloxy-2,2,6,6-tetramethylpiperidin,

4-Stearoyloxy-1,2,2,6,6-pentamethylpiperidin,

2,2,6,6-Tetramethylpiperidylbehenat,

1,2,2,6,6-Pentamethylpiperidylbehenat,

2,2,4,4-Tetramethyl-7-oxa-3,20-diaza-dispiro-[5.1.11.2]-heneicosan-21-on,

2,2,3,4,4-Pentamethyl-7-oxa-3,20-diaza-dispiro-[5.1.11.2]-heneicosan-21-on,

2,2,4,4-Tetramethyl-3-acetyl-7-oxa-3,20-diaza-dispiro-[5.1.11.2]-heneicosan-21-on,

2,2,4,4-Tetramethyl-7-oxa-3,20-diaza-20-(β-lauryl-oxycarbonylethyl)-21-oxo-dispiro-[5.1.11.2]-heneicosan, 2,2,3,4,4-Pentamethyl-7-oxa-3,20-diaza-20-(β-lauryloxycarbonylethyl)-21-oxo-dispiro-[5.1.11.2]-heneicosan,

2,2,4,4-Tetramethyl-3-acetyl-7-oxa-3,20-diaza-20-(β-lauryloxycarbonylethyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)-biphenyl,

NN'N''N'''-tetrakis-{2,4-bis-[N-(2,2,6,6-tetramethyl-4-piperidyl)-butylamino]-1,3,5-triazin-6-yl}-4,7-diazadecan-1,10-diamin, NN'N''N'''-tetrakis-{2,4-bis-[N-(1,2,2,6,6-pentamethyl-4-piperidyl)-butylamino]-1,3,5-triazin-6-yl}-4,7-diazadecan-1,10-diamin, NN'N''N'''-tetrakis-{2,4-bis-[N-(2,2,6,6-tetramethyl-4-piperidyl)-methoxypropylamino]-1,3,5-triazin-6-yl}-4,7-diazadecan-1,10-diamin, NN'N''N'''-tetrakis-{2,4-bis-[N-(1,2,2,6,6-pentamethyl-4-piperidyl)-methoxypropylamino]-1,3,5-triazin-6-yl}-4,7-diazadecan-1,10-diamin, Bis-(1,2,2,6,6-pentamethyl-piperidyl)-n-butyl-3,5-di-tert.-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.6.2

Poly-N,N'-bis-(2,2,6,6-tetramethyl-4-piperidyl)-1,8-diazadecylen, Kondensationsprodukt aus 1-(2-Hydroxyethyl)-2,2,6,6-tetramethyl-4-hydroxypiperidin und Bernsteinsäure, Kondensationsprodukt aus N,N'-bis-(2,2,6,6-tetramethyl-4-piperidyl)-hexamethylendiamin und 4-tert.-Octylamino-2,6-dichlor-1,3,5-triazin, Kondensationsprodukt aus N,N'-bis-(2,2,6,6-tetramethyl-4-piperidyl)-hexamethylendiamin und 4-Morpholino-2,6-dichlor-1,3,5-triazin.

2.7 Oxalsäurediamide, beispielsweise

4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von ortho- und para-Methoxysowie von o- und p-Ethoxy-di-substituierten Oxaniliden.

3. Metalldesaktivatoren, beispielsweise

N,N'-Diphenyloxalsäurediamid, N-Salicylyl-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloyl-amino-1,2,3-triazol, Bis-benzyliden-oxalsäuredihydrazid.

4. Phosphite und Phosphonite, beispielsweise

Triphenylphosphit, Diphenylalkylphosphite, Phenyl-dialkylphosphite, Trisnonylphenylphosphit, Trilaurylphosphit, Trioctadecylphosphit, Distearylpentaerythrityl-diphosphit, Tris(2,4-di-t-butylphenyl)phosphit, Diisodecylpentaerythrityl-diphosphit, Bis(2,4-di-t-butylphenyl)-pentaerythrityl-diphosphit, Tristearyl-sorbityltriphosphit, Tetrakis-(2,4-di-t-butylphenyl)-4,4'-biphenylen-diphosphonit, 3,9-Bis-(2,4-di-t-butyl-phenoxy)-2,4,8,10-tetraoxa-3,9-diphosphaspiro(5.5)-undecan, Tris(2-t-butyl-4-thio(2'-methenyl-4'-hydroxy-5'-t-butyl)-phenyl-5-methenyl)-phenylphosphit.

5. Peroxid zerstörende Verbindungen, beispielsweise

Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyl-dithiocarbamate,Dioctadecyldisulfid, Dioctadecylmonosulfid, Pentaerythrit-tetrakis-(β-dodecyl-mercapto)-propionat.

6. Basische Co-Stabilisatoren, beispielsweise

Melamin, Polyvinylpyrrolidon, Dicyandiamid, Triallyl-cyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.

7. Nukleierungsmittel, beispielsweise

4-t-Butylbenzoesäure, Adipinsäure, Diphenylessigsäure, Dibenzylidensorbitol.

8. Füllstoffe und Verstärkungsmittel, beispielsweise

Calciumcarbonat, Silikate, Glasfasern, Asbest, Talk, Kaolin, Glimmer, Bariumsulfat, Metalloxide und -hydroxide, Ruß, Graphit.

9. Sonstige Zusätze, beispielsweise

Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 7 werden den zu stabilisierenden Polyolefinen in einer Menge von 0,01 bis 10, vorzugsweise 0,01 bis 5 Gew.-%, bezogen auf das Polyolefin zugesetzt. Der Mengenanteil der Additive der Gruppen 8 und 9 beträgt 1 bis 180, vorzugsweise 10 bis 80 Gew.-%, bezogen auf das Polyolefin.

Die erfindungsgemäß ein Carbonsäureanhydrid in freier oder gebundener Form enthaltenden Polyolefine weisen eine wesentlich geringere Korrosivität gegenüber Metallen auf und besitzen einen verbesserten Normgelbwert (Yellowness-Index). Da sie keine Salze enthalten, sind sie besonders gut zur Anwendung in Verfahren geeignet, bei denen das Polyolefin gelöst und anschließend filtriert wird oder die Lösung durch eine Düse geschickt wird.

Die nachfolgenden Beispiele dienen der weiteren Erläuterung des Erfindungsgegenstandes.

Die Bestimmung der Korrosivität erfolgte in der Weise, daß ein 25 mm langes, 10 mm breites und 0,2 mm dik-kes Plättchen aus gehärtetem Bandstahl (C-Gehalt: 0,07 %) zurechtgeschnitten und mit Aceton entfettet wurde. Dieses Stahlplättchen wurde mit 6 g Polyolefinpulver bei 250°C zu einer Platte verpreßt, so daß es vollkommen im Polymeren eingebettet war. Nach 1 h bei 250°C ließ man die Polyolefinpreßplatte 10 min abkühlen und befreite anschließend das darin enthaltene Stahlplättchen rückstandsfrei vom Polymeren. Die Stahlplättchen wurden auf 0,00001 g genau gewogen und für 1 h in ein Wasserdampfbad gehängt. Der Korrosionswert für das entsprechende Polyolefin ergab sich dann aus:

$$\text{Korrosionswert in \% } = \frac{\text{Auswaage (g) - Einwaage (g)}}{\text{Einwaage (g)}} \times 100$$

Der Mittelwert aus zwei Einzelmessungen wird auf zwei Kommastellen gerundet als Korrosionswert angegeben.

Die Bestimmung des Normgelbwerts (Yellowness Index) erfolgte nach DIN 6167.

Beispiel 1

5 kg eines unstabilisierten Polyethylenpulvers (hergestellt mittels Ziegler-Katalysator) (Dichte 0,956 g/cm$^3$, MFI 190/5 2 g/10) min wurden mit 0,12 Gew.-% Pentaerythrittetrakis[3-(3,5-di-t-butyl-4-hydroxyphenyl)-propionat] und 0,3 Gew.-% Maleinsäureanhydrid vermischt. Das Gemisch wurde sodann in einem Einschneckenextruder (D = 20 mm, L = 18 D, Ausstoß 1 kg/h) bei 250°C plastiziert und anschließend in ein Granulat überführt. An dem Granulat wurde ein Korrosionswert von 0,02 % und ein Normgelbwert von 0,3 gemessen.

Vergleichsbeispiel A

Das Beispiel wurde wiederholt, jedoch ohne Zugabe von Maleinsäureanhydrid. Das erhaltene Granulat zeigte einen Korrosionswert von 0,32 % und einen Normgelbwert von 7,6.

Beispiel 2

5 kg eines unstabilisierten Polyethylenpulvers (hergestellt mittels Ziegler-Katalysator) (DIchte 0,956 g/cm$^3$, MFI 190/5 2 g/10 min) wurden mit 0,12 Gew.-% Pentaerythrittetrakis[3-(3,5-di-t-butyl-4-hydroxyphenyl)-propionat]und 10 Gew.-% eines Polypropylen-Maleinsäureanhydrid-Pfropfpolymeren (Anteil Maleinsäureanhydrid: ca. 6 Gew.-%) vermischt. Das Gemisch wurde sodann in einem Einschneckenextruder (D = 2 mm, L = 18 D, Ausstoß 1 kg/h) bei 250°C plastiziert und anschließend in ein Granulat überführt. An dem Granulat wurde ein Korrosionswert von 0,06 % gemessen.

Vergleichsbeispiel B

Das Beispiel wurde wiederholt, jedoch ohne Zugabe des Polypropylen-Maleinsäureanhydrid-Pfropfpolymeren. Das erhaltene Granulat zeigte einen Korrosionswert von 0,32 %.

**Beschreibung für folgende Vertragsstaaten : DE, FR, GB**

Die Erfindung bezieht sich auf eine Polyolefin-Formmasse, welche eine geringe Korrosivität gegenüber Metallteilen besitzt,

Die modernen zur Olefin-Polymerisation verwendeten Übergangsmetallkatalysatoren werden in derart geringen Mengen eingesetzt, daß ihre Reste in den meisten Fällen in den Polymeren verbleiben können. Allerdings können diese Reste bei der Weiterverarbeitung der Polymeren auch Probleme verursachen. So kommt es bei der Zersetzung der Katalysatorrückstände während der Verarbeitung zur Freisetzung von Chlorwasserstoff (HCl) und damit zur Korrosion von Metallteilen der Verarbeitungsmaschinen (z.B. Extrudern). Weiterhin kann die Zersetzung der Katalysatorrückstände zu einer Gelbverfärbung des Granulats führen. Polymer-Folien können an Glanz verlieren oder weisen eine verminderte Transparenz auf.

Zur Vermeidung dieser Probleme ist es üblich, organische Basen, wie Salze der Carbonsäuren, hauptsächlich Salze der Fettsäuren, wie beispielsweise Calciumstearat oder Zinkstearat, als Säureakzeptoren zu verwenden und den Polyolefinpulvern bei der Granulierung als Additive zuzusetzen. Eine weitere Möglichkeit zur Stabilisierung der Polyolefine gegenüber sauren Katalysatorzersetzungsprodukten besteht in der Zugabe von anorganischen Basen, wie basischen Hydroxiden (Ca(OH)$_2$) oder Oxiden (ZnO). Ähnliche Additive werden auch zur Verringerung des Vergilbens von Polyolefinen eingesetzt.

In den vorgenannten Fällen erfolgt die Stabilisierung über eine Neutralisation des Chlorwasserstoffs. Als Endprodukt fällt somit eine salzartige Verbindung an. Bei der Weiterverarbeitung von Polyolefinen gibt es jedoch Verfahren, bei denen kein Salz im Polymeren sein darf, beispielsweise bei der Verarbeitung aus einer Lösung, weil Filter verstopfen könnten.

Es bestand daher die Aufgabe, die Korrosivität und die Vergilbungsneigung von Polyolefin-Formmassen zu verringern, ohne daß dabei eine Salzbildung auftritt.

Bekannt sind Polyolefin-Formmassan, welche mittels Vanadinkatalysatoren hergestellt wurden und eine geringe Neigung zur Verfärbung besitzen (vgl. JP 62-129 330 A). Sie enthalten Polycarbonsäuren, Hydroxypolycarbonsäuren oder deren Salze, beispielsweise Bernsteinsäure, Malonsäure, Maleinsäure, o-Phthalsäure, Ammoniumsuccinat, Natriumglutarat, Natriumcitrat, und dergleichen.

Ebenso bekannt sind Polyolefin-Formmassen, welche zur Verbesserung der Haftung der Polyolefine an mineralischen Füil- und Verstärkungsstoffen oder polaren Polymeren Copolymerisate von Olefinen mit Doppelbindungen enthaltenden Carbonsäureanhydriden (vgl. GB 2163171) oder Pfropfpolymerisate von Doppelbindungen enthaltenden Verbindungen auf Polyolefinen enthalten (vgl. US 4,675,210, US 4,198,327, US 3,437,550, GB 2 163 171).

Es wurde nun gefunden, daß eine Polyolefin-Formmasse, welche ein Carbonsäureanhydrid in freier Form enthält, sehr geringe Korrosivität und Neigung zur Vergiibung aufweist.

Die Erfindung betrifft somit die Verwendung eines Carbonsäureanhydrids in freier Form in einer Menge von 0,01 bis 3 Gew.-%, bezogen auf das zu stabilisierende Material, zur Herstellung einer Polyolefin-Formasse die an Maschinenteilen eine verringerte, durch die Polyolefin-Formmasse hervorgerufene Korrosion bewirkt.

Die erfindungsgemäße Polyolefin-Formmasse enthält ein Polyolefin, beispielsweise eines der nachstehend aufgeführten:

1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyethylen oder mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

Weiterhin enthält die erfindungsgemäße Polyolefin-Formmasse ein Carbonsäureanhydrid. Geeignete Carbonsäureanhydride sind solche von Monocarbonsäuren, wie beispielsweise Ölsäureanhydrid, Capronsäureanhydrid, n-Undecansäureanhydrid, Laurinsäureanhydrid, Palmitinsäureanhydrid, Margarinsäureanhydrid, Sebacinsäureanhydrid, Stearinsäureanhydrid, Acrylsäureanhydrid, Methacrylsäureanhydrid, Crotonsäureanhydrid, Isocrotonsäureanhydrid, Angelicasäureanhydrid, und solche von Dicarbonsäuren, wie beispielsweise Bernsteinsäureanhydrid, Glutarsäureanhydrid, Maleinsäureanhydrid, Itaconsäureanhydrid, Citraconsäureanhydrid.

Bevorzugt sind Dicarbonsäureanhydride mit einer C-C-Doppelbindung, insbesondere Maleinsäureanhydrid.

Die erfindungsgemäße Formmasse enthält das Carbonsäureanhydrid in freier Form.

Die Carbonsäureanhydride werden nach allgemein üblichen Methoden in die organischen Polymeren eingearbeitet. Die Einarbeitung kann beispielsweise durch Einmischen der Komponenten und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichern Verdunstenlassen des Lösemittels kann die Einarbeitung erfolgen. Die den Polyolefinen zuzusetzende Menge an Carbonsäureanhydrid liegt bei 0,01 bis 3, vorzugsweise 0,1 bis 1,0 Gew.-%, bezogen auf das zu stabilisierende Material.

Die Carbonsäureanhydride können auch in Form eines Masterbatches, der diese Komponenten beispielsweise in einer Konzentration von 1 bis 50, vorzugsweise 2,5 bis 20 Gew.-% enthält, den zu stabilisierenden Polyolefinen zugesetzt werden.

Zusätzlich können die zu stabilisierenden Polyolefine noch folgende Additive enthalten, wie beispielsweise:

1. Antioxidantien

1.1 Alkylierte Monophenole, beispielsweise

2,6-Di-t-butyl-4-methylphenol,
2-t-Butyl-4,6-dimethylphenol,
2,6-Di-t-butyl-4-ethylphenol,
2,6-Di-t-butyl-4-n-butylphenol,
2,6-Di-t-butyl-4-i-butylphenol,
2,6-Di-cyclopentyl-4-methylphenol,
2-($\alpha$-Methylcyclohexyl)-4,6-dimethylphenol,
2,6-Di-octadecyl-4-methylphenol,
2,4,6-Tri-cyclohexylphenol,
2,6-Di-t-butyl-4-methoxymethylphenol.

1.2 Alkylierte Hydrochinone, beispielsweise

2,6-Di-t-butyl-4-methoxyphenol,

2,5-Di-t-butyl-hydrochinon,

2,5-Di-t-amyl-hydrochinon,

2,6-Diphenyl-4-octadecyloxyphenol.

1.3 Hydroxylierte Thiodiphenylether, beispielsweise

2,2'-Thio-bis-(6-t-butyl-4-methylphenol),

2,2'-Thio-bis-(4-octylphenol),

4,4'-Thio-bis-(6-t-butyl-3-methylphenol),

4,4'-Thio-bis-(6-t-butyl-2-methylphenol).

1.4 Alkyliden-Bisphenole, beispielsweise

2,2'-Methylen-bis-(6-t-butyl-4-methylphenol),

2,2'-Methylen-bis-(6-t-butyl-4-ethylphenol),

2,2'-Methylen-bis-[4-methyl-6-($\alpha$-methylcyclohexyl)-phenol],

2,2'-Methylen-bis-(4-methyl-6-cyclohexylphenol),

2,2'-Methylen-bis-(6-nonyl-4-methylphenol),

2,2'-Methylen-bis-(4,6-di-t-butylphenol),

2,2'-Ethyliden-bis-(4,6-di-t-butylphenol),

2,2'-Ethyliden-bis-(6-t-butyl-4-isobutylphenol),

2,2'-Methylen-bis-[6-($\alpha$-methylbenzyl)-4-nonylphenol],

2,2'-Methylen-bis-[6-($\alpha,\alpha$-dimethylbenzyl)-4-nonylphenol],

4,4'-Methylen-bis-(2,6-di-t-butylphenol),

4,4'-Methylen-bis-(6-t-butyl-2-methylphenol),

1,1-Bis-(5-t-butyl-4-hydroxy-2-methylphenyl)-butan,

2,6-Di-(3-t-butyl-5-methyl-2-hydroxybenzyl)-4-methylphenol,

1,1,3-Tris-(5-t-butyl-4-hydroxy-2-methylphenyl)-butan,

1,1-Bis-(5-t-butyl-4-hydroxy-2-methylphenyl)-3-n-dodecylmercaptobutan,

Di-(3-t-butyl-4-hydroxy-5-methylphenyl)-dicyclopentadien,

Di-[2-(3'-t-butyl-2'-hydroxy-5'-methyl-benzyl)-6-t-butyl-4-methylphenyl]-terephthalat.

1.5 Benzylverbindungen, beispielsweise

1,3,5-Tri-(3,5-di-t-butyl-4-hydroxybenzyl)-2,4,6-tri-methylbenzol,

Di-(3,5-di-t-butyl-4-hydroxybenzyl)-sulfid,

3,5-Di-t-butyl-4-hydroxybenzyl-mercaptoessigsäure-isooctylester,

Bis-(4-t-butyl-3-hydroxy-2,6-dimethylbenzyl)-dithiol-terepthalat,

1,3,5-Tris-(3,5-di-t-butyl-4-hydroxybenzyl)-isocyanurat,

1,3,5-Tris-(4-t-butyl-3-hydroxy-2,6-dimethylbenzyl)-isocyanurat,

3,5-Di-t-butyl-4-hydroxybenzyl-phophonsäure-dioctadecylester

Calciumsalz des 3,5-Di-t-butyl-4-hydroxybenzyl-phophonsäure-monoethylesters.

1.6 Acylaminophenole, beispielsweise

4-Hydroxy-laurinsäureanilid,

4-Hydroxy-stearinsäureanilid,

2,4-Bis-octylmercapto-6-(3,5-di-butyl-4-hydroxy-anilino)-s-triazin

N-(3,5-di-t-butyl-4-hydroxyphenyl)-carbaminsäure-octylester.

1.7 Ester der $\beta$-(5-t-butyl-4-hydroxy-3-methylphenyl)-propionsäure mit ein- oder mehrwertigen Alkoholen, wie beispielsweise mit

| Methanol, | Diethylenglykol, |
| --- | --- |

(fortgesetzt)

| Octadecanol, | Triethylenglykol, |
|---|---|
| 1,6-Hexandiol, | Pentaerythrit, |
| Neopentylglykol, | Tris-hydroxyethyl-isocyanurat, |
| Thiodiethylenglykol, | Di-hydroxyethyl-oxalsäurediamid. |

1.8 Ester der β-(3,5-Di-t-butyl-4-hydroxy-phenyl)-propionsäure mit ein- oder mehrwertigen Alkoholen, wie beispielsweise mit

| Methanol, | Diethylenglykol, |
|---|---|
| Octadecanol, | Triethylenglykol, |
| 1,6-Hexandiol, | Pentaerythrit, |
| Neopentylglykol, | Tris-hydroxyethyl-isocyanurat, |
| Thiodiethylenglykol, | Di-hydroxyethyl-oxalsäurediamid. |

1.9 Amide der β-(3,5-Di-t-butyl-4-hydroxyphenyl)-propionsäure, wie beispielsweise

N,N'-Di-(3,5-di-t-butyl-4-hydroxyphenylpropionyl)-hexamethylendiamin,
N,N'-Di-(3,5-di-t-butyl-4-hydroxyphenylpropionyl)-trimethylendiamin,
N,N'-Di-(3,5-di-t-butyl-4-hydroxyphenylpropionyl)-hydrazin.

1.10 Ester der 3,3-Bis(3'-t-butyl-4'-hydroxyphenyl)-butansäure mit mehrwertigen Alkoholen, wie beispielsweise mit Ethylenglykol, 1,4-Butandiol, 1,6-Hexandiol.

2. UV-Absorber und Lichtschutzmittel

2.1 2-(2'-Hydroxyphenyl)-benztriazole, wie beispielsweise das

5'-Methyl-, 3',5'-Di-t-butyl-, 5'-t-Butyl-, 5'-(1,1,3,3-Tetramethylbutyl)-, 5-Chlor-3',5'-di-t-butyl-, 5-Chlor-3'-t-butyl-5'methyl-, 3'-sec.-Butyl-5'-t-butyl-, 4'-Octoxy-, 3',5'-Di-t-amyl-, 3',5'-Bis-(α,α-dimethylbenzyl)-Derivat.

2.2 2-Hydroxybenzophenone, beispielsweise das

4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3 Ester von gegebenenfalls substituierten Benzoesäuren, beispielsweise

4-t-Butyl-phenylsalicylat, Phenylsalicylat, Octylphenylsalicylat, Dibenzoylresorcin, Bis-(4-t-butylbenzoyl)-resorcin, Benzoylresorcin, 3,5-Di-t-butyl-4-hydroxy-benzoesäure-2,4-di-t-butylphenylester, 3,5-Di-t-butyl-4-hydroxybenzoesäurehexadecylester.

2.4 Acrylate, beispielsweise

α-Cyan-β,β-diphenylacrylsäure-ethylester bzw. -isooctylester, α-Carbomethoxy-zimtsäuremethylester, α-Cyano-β-methyl-p-methoxyzimtsäuremethylester bzw. -butylester, α-Carbomethoxy-p-methoxyzimtsäuremethylester, N-(β-Carbomethoxy-β-cyano-vinyl)-2-methyl-indolin.

2.5 Nickelverbindungen, beispielsweise

Nickelkomplexe des 2,2'-Thio-bis-[4-(1,1,3,3-tetramethyl-butyl)-phenols], wie der 1:1- oder 1:2-Komplex, gegebenenfalls mit zusätzlichen Liganden wie n-Butylamin, Triethanolamin oder N-Cyclohexyl-diethanolamin, Nickelalkyldithiocarbamate, Nickelsalze von 4-Hydroxy-3,5-di-t-butylbenzylphosphonsäure-mono-alkylestern wie vom Methyl- oder Ethylester, Nickelkomplexe von Ketoximen wie von 2-Hydroxy-4-methyl-phenylundecylketonoxim, Nickelkomplexe des 1-Phenyl-4-lauroyl-5-hydroxypyrazols, gegebenenfalls mit zusätzlichen Liganden, Nickelsalze der 2-Hydroxy-4-alkoxybenzophenone.

2.6 Sterisch gehinderte Amine, beispielsweise

2.6.1

Bis-(2,2,6,6-tetramethylpiperidyl)-sebacat,
Bis-(1,2,2,6,6-pentamethylpiperidyl)-sebacat,
Bis-(2,2,6,6-tetramethylpiperidyl)-glutarat,
Bis-(1,2,2,6,6-pentamethylpiperidyl)-glutarat,
Bis-(2,2,6,6-tetramethylpiperidyl)-succinat,
Bis-(1,2,2,6,6-pentamethylpiperidyl)-succinat,
4-Stearyloxy-2,2,6,6-tetramethylpiperidin,
4-Stearyloxy-1,2,2,6,6-pentamethylpiperidin,
4-Stearoyloxy-2,2,6,6-tetramethylpiperidin,
4-Stearoyloxy-1,2,2,6,6-pentamethylpiperidin,
2,2,6,6-Tetramethylpiperidylbehenat,
1,2,2,6,6-Pentamethylpiperidylbehenat,
2,2,4,4-Tetramethyl-7-oxa-3,20-diaza-dispiro-[5.1.11.2]-heneicosan-21-on,
2,2,3,4,4-Pentamethyl-7-oxa-3,20-diaza-dispiro-[5.1.11.2]-heneicosan-21-on,
2,2,4,4-Tetramethyl-3-acetyl-7-oxa-3,20-diaza-dispiro-[5.1.11.2]-heneicosan-21-on,
2,2,4,4-Tetramethyl-7-oxa-3,20-diaza-20-(β-lauryl-oxycarbonylethyl)-21-oxo-dispiro-[5.1.11.2]-heneicosan, 2,2,3,4,4-Pentamethyl-7-oxa-3,20-diaza-20-(β-lauryloxycarbonylethyl)-21-oxo-dispiro-[5.1.11.2]-heneicosan,
2,2,4,4-Tetramethyl-3-acetyl-7-oxa-3,20-diaza-20-(β-lauryloxycarbonylethyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis(1,2,2,6,6-pentamethyl-4-piperidyl)-biphenyl, NN'N''N'''-tetrakis-{2,4-bis-[N-(2,2,6,6-tetramethyl-4-piperidyl)-butylamino]-1,3,5-triazin-6-yl}-4,7-diazadecan-1,10-diamin, NN'N''N'''-tetrakis-{2,4-bis-[N-(1,2,2,6,6-pentamethyl-4-piperidyl)-butylamino]-1,3,5-triazin-6yl}-4,7-diazadecan-1,10-diamin, NN'N''N'''-tetrakis-{2,4-bis-[N-(2,2,6,6-tetramethyl-4-piperidyl)-methoxypropylamino]-1,3,5-triazin-6-yl}-4,7-diazadecan-1,10-diamin, NN'N''N'''-tetrakis-{2,4-bis-[N-(1,2,2,6,6-pentamethyl-4-piperidyl)-methoxypropylamino]-1,3,5-triazin-6-yl}-4,7-diazadecan-1,10-diamin, Bis-(1,2,2,6,6-pentamethyl-piperidyl)-n-butyl-3,5-di-tert.-butyl-4-hydroxy-benzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethyl-piperazinon).

2.6.2

Poly-N,N'-bis-(2,2,6,6-tetramethyl-4-piperidyl)-1,8-diazadecylen, Kondensationsprodukt aus 1-(2-Hydroxyethyl)-2,2,6,6-tetramethyl-4-hydroxypiperidin und Bernsteinsäure, Kondensationsprodukt aus N,N'-bis-(2,2,6,6-tetramethyl-4-piperidyl)-hexamethylendiamin und 4-tert.-Octylamino-2,6-dichlor-1,3,5-triazin, Kondensationsprodukt aus N,N'-bis-(2,2,6,6-tetramethyl-4-piperidyl)-hexamethylendiamin und 4-Morpholino-2,6-dichlor-1,3,5-triazin.

2.7 Oxalsäurediamide, beispielsweise

4,4'-Di-octyloxy-oxanilid, 2,2'-Di-octyloxy-5,5'-di-t-butyloxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von ortho- und para-Methoxy-sowie von o- und p-Ethoxy-di-substituierten Oxaniliden.

3. Metalldesaktivatoren, beispielsweise

N,N'-Diphenyloxalsäurediamid, N-Salicylyl-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloyl-amino-1,2,3-triazol, Bis-benzyliden-oxalsäuredihydrazid.

### 4. Phosphite und Phosphonite, beispielsweise

Triphenylphosphit, Diphenylalkylphosphite, Phenyl-dialkylphosphite, Trisnonylphenylphosphit, Trilaurylphosphit, Trioctadecylphosphit, Distearylpentaerythrityl-diphosphit, Tris(2,4-di-t-butylphenyl)phosphit, Diisodecylpentaerythrityl-diphosphit, Bis(2,4-di-t-butylphenyl)-pentaerythrityl-diphosphit, Tristearyl-sorbityltriphosphit, Tetrakis-(2,4-di-t-butylphenyl)-4,4'-biphenylendiphosphonit, 3,9-Bis-(2,4-di-t-butyl-phenoxy)-2,4,8,10-tetraoxa-3,9-diphosphaspiro(5.5)-undecan, Tris(2-t-butyl-4-thio(2'-methenyl-4'-hydroxy-5'-t-butyl)-phenyl-5-methenyl)-phenylphosphit.

### 5. Peroxid zerstörende Verbindungen, beispielsweise

Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyl-dithiocarbamate,Dioctadecyldisulfid, Dioctadecylmonosulfid, Pentaerythrit-tetrakis-(β-dodecyl-mercapto)-propionat.

### 6. Basische Co-Stabilisatoren, beispielsweise

Melamin, Polyvinylpyrrolidon, Dicyandiamid, Triallyl-cyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.

### 7. Nukleierungsmittel, beispielsweise

4-t-Butylbenzoesäure, Adipinsäure, Diphenylessigsäure, Dibenzylidensorbitol.

### 8. Füllstoffe und Verstärkungsmittel, beispielsweise

Calciumcarbonat, Silikate, Glasfasern, Asbest, Talk, Kaolin, Glimmer, Bariumsulfat, Metalloxide und -hydroxide, Ruß, Graphit.

### 9. Sonstige Zusätze, beispielsweise

Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 7 werden den zu stabilisierenden Polyolefinen in einer Menge von 0,01 bis 10, vorzugsweise 0,01 bis 5 Gew.-%, bezogen auf das Polyolefin zugesetzt. Der Mengenanteil der Additive der Gruppen 8 und 9 beträgt 1 bis 180, vorzugsweise 10 bis 80 Gew.-%, bezogen auf das Polyolefin.

Die erfindungsgemäß ein Carbonsäureanhydrid in freier Form enthaltenden Polyolefine weisen eine wesentlich geringere Korrosivität gegenüber Metallen auf und besitzen einen verbesserten Normgelbwert (Yellowness-Index). Da sie keine Salze enthalten, sind sie besonders gut zur Anwendung in Verfahren geeignet, bei denen das Polyolefin gelöst und anschließend filtriert wird oder die Lösung durch eine Düse geschickt wird.

Die nachfolgenden Beispiele dienen der weiteren Erläuterung des Erfindungsgegenstandes.

Die Bestimmung der Korrosivität erfolgte in der Weise, daß ein 25 mm langes, 10 mm breites und 0,2 mm dickes Plättchen aus gehärtetem Bandstahl (C-Gehalt: 0,07 %) zurechtgeschnitten und mit Aceton entfettet wurde. Dieses Stahlplättchen wurde mit 6 g Polyolefinpulver bei 250°C zu einer Platte verpreßt, so daß es vollkommen im Polymeren eingebettet war. Nach 1 h bei 250°C ließ man die Polyolefinpreßplatte 10 min abkühlen und befreite anschließend das darin enthaltene Stahlplättchen rückstandsfrei vom Polymeren. Die Stahlplättchen wurden auf 0,00001 g genau gewogen und für 1 h in ein Wasserdampfbad gehängt. Der Korrosionswert für das entsprechende Polyolefin ergab sich dann aus:

$$\text{Korrosionswert in \% } = \frac{\text{Auswaage (g) - Einwaage (g)}}{\text{Einwaage (g)}} \times 100$$

Der Mittelwert aus zwei Einzelmessungen wird auf zwei Kommastellen gerundet als Korrosionswert angegeben.

Die Bestimmung des Normgelbwerts (Yellowness Index) erfolgte nach DIN 6167.

Beispiel 1

5 kg eines unstabilisierten Polyethylenpulvers (hergestellt mittels Ziegler-Katalysator) (Dichte 0,956 g/cm$^3$, MFI 190/5 2 g/10) min wurden mit 0,12 Gew.-% Pentaerythrit-tetrakis[3-(3,5-di-t-butyl-4-hydroxyphenyl)-propionat] und 0,3 Gew.-% Maleinsäureanhydrid vermischt. Das Gemisch wurde sodann in einem Einschneckenextruder (D = 20 mm, L = 18 D, Ausstoß 1 kg/h) bei 250° C plastiziert und anschließend in ein Granulat überführt. An dem Granulat wurde ein Korrosionswert von 0,02 % und ein Normgelbwert von 0,3 gemessen.

Vergleichsbeispiel A

Das Beispiel wurde wiederholt, jedoch ohne Zugabe von Maleinsaureanhydrid. Das erhaltene Granulat zeigte einen Korrosionswert von 0,32 % und einen Normgelbwert von 7,6.

**Patentansprüche**

**Patentansprüche für folgende Vertragsstaaten : BE, IT, LU, NL, ES**

1. Verwendung eines Carbonsäureanhydrids in freier oder gebundener Form in einer Menge von 0,01 bis 3 Gew.-%, bezogen auf das zu stabilisierende Material, zur Herstellung einer Polyolefin-Formasse, die an Maschinenteilen eine verringerte, durch die Polyolefin-Formmasse hervorgerufene Korrosion bewirkt.

2. Verwendung nach Anspruch 1, dadurch gekennzeichnet, daß das Carbonsäureanhydrid in freier Form eingesetzt wird.

3. Verwendung nach Anspruch 1, dadurch gekennzeichnet, daß das Carbonsäureanhydrid eine C-C-Doppelbindung besitzt.

4. Verwendung nach Anspruch 3, dadurch gekennzeichnet, daß das Carbonsäureanhydrid in Form eines Copolymerisats mit einem Olefin oder in Form eines Pfropfpolymerisats auf einem Polyolefin vorliegt.

5. Verwendung nach Anspruch 1, dadurch gekennzeichnet, daß das Polyolefin ausgewählt wurde unter Homopolymeren von Moonoolefinen, Homopolymeren von Diolefinen, Homopolymeren von Cycloolefinen, Copolymeren von Mono- und Diolefinen untereinander oder mit anderen Vinylmonomeren sowie Mischungen dieser Polymeren.

6. Verwendung nach Anspruch 1, dadurch gekennzeichnet, daß das Polyolefin ein Homo- oder Copolymer von Ethylen, Propylen, Buten-1, Hexen-1, 4-Methylpenten-1 oder Octen-1 ist.

7. Polyolefin-Formmasse bestehend aus

    97 bis 99,99 Gew.-% Polyolefin und
    0,01 bis 3 Gew.-% eines Carbonsäureanhydrids in freier Form.

8. Verfahren zur Verringerung der Korrosion an Maschinenteilen bei der Herstellung einer Polyolefin-Formmasse, durch die Formmasse selbst dadurch gekennzeichnet, daß man der Formmasse 0.01 bis 3 Gew.-%, bezogen auf das zu stabilisierende Material, eines Carbonsäureanhydrids in freier Form zusetzt.

**Patentansprüche für folgende Vertragsstaaten : DE, FR, GB**

1. Verwendung eines Carbonsäureanhydrids in freier Form in einer Menge von 0,01 bis 3 Gew.-%, bezogen auf das zu stabilisierende Material, zur Herstellung einer Polyolefin-Formmasse, die an Maschinenteilen eine verringerte, durch die Polyolefin-Formmasse hervorgerufene Korrosion bewirkt.

2. Verwendung nach Anspruch 1, dadurch gekennzeichnet, daß das Carbonsäureanhydrid eine C-C-Doppelbindung besitzt.

3. Verwendung nach Anspruch 1, dadurch gekennzeichnet, daß das Polyolefin ausgewählt wurde unter Homopolymeren von Monoolefinen, Homopolymeren von Diolefinen, Homopolymeren von Cycloolefinen, Copolymeren von Mono- und Diolefinen untereinander oder mit anderen Vinylmonomeren sowie Mischungen dieser Polymeren.

4. Verwendung nach Anspruch 1, dadurch gekennzeichnet, daß das Polyolefin ein homo- oder Copolymer von Ethylen, Propylen, Buten-1, Hexen-1, 4-Methylpenten-1 oder Octen-1 ist.

5. Polyolefin-Formmasse bestehend aus 97 bis 99,99 Gew.-% Polyolefin und 0,01 bis 3 Gew.- % eines Carbonsäureanhydrids in freier Form.

6. Verfahren zur Verringerung der Korrosion an Maschinenteilen bei der Herstellung einer Polyolefin-Formmasse, dadurch gekennzeichnet, daß man der Formmasse 0,01 bis 3 Gew.-%, bezogen auf das zu stabilisierende Material, eines Carbonsäureanhydrids in freier Form zusetzt.

**Claims**

**Claims for the following Contracting States : BE, IT, LU, NL, ES**

1. The use of a carboxylic anhydride in free or bound form in an amount of from 0.01 to 3% by weight, based on the material to be stabilized, for the preparation of a polyolefin molding composition which causes reduced corrosion, produced by the polyolefin molding composition, on machine parts.

2. The use as claimed in claim 1, wherein the carboxylic anhydride is employed in free form.

3. The use as claimed in claim 1, wherein the carboxylic anhydride contains a C-C double bond.

4. The use as claimed in claim 3, wherein the carboxylic anhydride is in the form of a copolymer with an olefin or in the form of a graft polymer on a polyolefin.

5. The use as claimed in claim 1, wherein the polyolefin has been selected from homopolymers of monoolefins, homopolymers of diolefins, homopolymers of cycloolefins, copolymers of mono- and diolefins with one another or with other vinyl monomers, and mixtures of these polymers.

6. The use as claimed in claim 1, wherein the polyolefin is a homopolymer or copolymer of ethylene, propylene, 1-butene, 1-hexene, 4-methyl-1-pentene or 1-octene.

7. A polyolefin molding composition consisting of

    from 97 to 99.99% by weight of polyolefin and
    from 0.01 to 3% by weight of a carboxylic anhydride in free form.

8. A process for reducing corrosion on machine parts during the preparation of a polyolefin molding composition by the molding composition itself, which comprises adding from 0.01 to 3% by weight, based on the material to be stabilized, of a carboxylic anhydride in free form to the molding composition.

**Claims for the following Contracting States : DE, FR, GB**

1. The use of a carboxylic anhydride in free form in an amount of from 0.01 to 3% by weight, based on the material to be stabilized, for the preparation of a polyolefin molding composition which causes reduced corrosion, produced by the polyolefin molding composition, on machine parts.

2. The use as claimed in claim 1, wherein the carboxylic anhydride contains a C-C double bond.

3. The use as claimed in claim 1, wherein the polyolefin has been selected from homopolymers of monoolefins, homopolymers of diolefins, homopolymers of cycloolefins, copolymers of mono- and diolefins with one another or with other vinyl monomers, and mixtures of these polymers.

4. The use as claimed in claim 1, wherein the polyolefin is a homopolymer or copolymer of ethylene, propylene, 1-butene, 1-hexene, 4-methyl-1-pentene or 1-octene.

5. A polyolefin molding composition consisting of from 97 to 99.99% by weight of polyolefin and from 0.01 to 3% by weight of a carboxylic anhydride in free form.

6. A process for reducing corrosion on machine parts during the preparation of a polyolefin molding composition, which comprises adding from 0.01 to 3% by weight, based on the material to be stabilized, of a carboxylic anhydride in free form to the molding composition.

**Revendications**

**Revendications pour les Etats contractants suivants : BE, IT, LU, NL, ES**

1. Utilisation d'un anhydride d'acide carboxylique sous forme libre ou liée en une quantité de 0,01 à 3 % en poids, par rapport à la matière à stabiliser, pour la fabrication d'une masse de moulage à base de polyoléfine, qui a pour effet de réduire la corrosion provoquée par la masse de moulage à base de polyoléfine sur les pièces de machines.

2. Utilisation selon la revendication 1, caractérisée en ce que l'anhydride d'acide carboxylique est utilisé sous forme libre.

3. Utilisation selon la revendication 1, caractérisée en ce que l'anhydride d'acide carboxylique possède une double liaison C-C.

4. Utilisation selon la revendication 3, caractérisée en ce que l'anhydride d'acide carboxylique est sous forme d'un copolymère avec une oléfine ou sous forme d'un polymère greffé sur une polyoléfine.

5. Utilisation selon la revendication 1, caractérisée en ce que la polyoléfine est choisie parmi les homopolymères de monooléfines, les homopolymères de diolefines, les homopolymères de cyclooléfines, les copolymères de mono- et diolefines entre eux ou avec d'autres monomères vinyliques, ainsi que les mélanges de ces polymères.

6. Utilisation selon la revendication 1, caractérisée en ce que la polyoléfine est un homo- ou copolymère d'éthylène, de propylène, de butène-1, d'hexène-1, de 4-méthylpentène-1 ou d'octène-1.

7. Masse de moulage à base de polyoléfine, constituée de 97 à 99,99 % en poids de polyoléfine et 0,01 à 3 % en poids d'un anhydride d'acide carboxylique sous forme libre.

8. Procédé pour réduire la corrosion sur les pièces de machines lors de la fabrication d'une masse de moulage à base de polyoléfine par la masse de moulage elle-même, caractérisé en ce que l'on ajoute à la masse de moulage 0,01 à 3 % en poids, par rapport à la matière à stabiliser, d'un anhydride d'acide carboxylique sous forme libre.

**Revendications pour les Etats contractants suivants : DE, FR, GB**

1. Utilisation d'un anhydride d'acide carboxylique sous forme libre en une quantité de 0,01 à 3 % en poids, par rapport à la matière à stabiliser, pour la fabrication d'une masse de moulage à base de polyoléfine, qui a pour effet de réduire la corrosion provoquée par la masse de moulage à base de polyoléfine sur les pièces de machines.

2. Utilisation selon la revendication 1, caractérisée en ce que l'anhydride d'acide carboxylique possède une double liaison C-C.

**3.** Utilisation selon la revendication 1, caractérisée en ce que la polyoléfine est choisie parmi les homopolymères de monooléfines, les homopolymères de dioléfines, les homopolymères de cyclooléfines, les copolymères de mono- et dioléfines entre eux ou avec d'autres monomères vinyliques, ainsi que les mélanges de ces polymères.

**4.** Utilisation selon la revendication 1, caractérisée en ce que la polyoléfine est un homo- ou copolymère d'éthylène, de propylène, de butène-1, d'hexène-1, de 4-méthylpentène-1 ou d'octène-1.

**5.** Masse de moulage à base de polyoléfine constituée de 97 à 99,99 % en poids de polyoléfine et 0,01 à 3 % en poids d'un anhydride d'acide carboxylique sous forme libre.

**6.** Procédé pour réduire la corrosion sur les pièces de machines lors de la fabrication d'une masse de moulage à base de polyoléfine, caractérisé en ce que l'on ajoute à la masse de moulage 0,01 à 3 % en poids, par rapport à la matière à stabiliser, d'un anhydride d'acide carboxylique sous forme libre.